# EUROPÄISCHE PATENTANMELDUNG

(11) **EP 0 761 625 A1**
(43) Veröffentlichungstag der Anmeldung: **12.03.1997**
(21) Anmeldenummer: 96112060.7
(22) Anmeldetag: 26.07.1996
(51) Int. Cl.: C04B 41/49, C09D 183/04, C08K 3/00

(54) **Siloxan-Füllstoff Mischungen, ein Verfahren zu ihrer Herstellung und ihre Verwendung für Beschichtungen**

(30) Priorität: 08.08.1995 DE 19529092
(71) Anmelder: BAYER AG, 51368 Leverkusen (DE)
(72) Erfinder: Mazanek, Jan, Dr., 51061 Köln (DE); Käsler, Karl-Heinz, 51467 Bergisch Gladbach (DE); Wagner, Gebhard, Dr., 51519 Odenthal (DE)

(57) **Zusammenfassung**

Die vorliegende Erfindung betrifft neuartige Mischungen, enthaltend im wasserfreien Zustand mindestens ein Polysiloxan, mindestens einen reaktiven Füllstoff, mindestens ein unreaktives Pigment und/oder einen unreaktiven Füllstoff, mindestens einen plättchen- oder faserförmigen Feststoff, mindestens ein reaktionsfähiges (Oligo)silan, sowie gegebenenfalls weitere Zusätze, ein Verfahren zur Herstellung sowie deren Verwendung.

## Beschreibung

Die vorliegende Erfindung betrifft neuartige Mischungen, enthaltend im wasserfreien Zustand mindestens ein Polysiloxan, mindestens einen reaktiven Füllstoff, mindestens ein unreaktives Pigment und/oder einen unreaktiven Füllstoff mindestens einen plättchen- oder faserförmigen Feststoff, mindestens ein reaktionsfähiges (Oligo)silan und gegebenenfalls weitere Zusätze, ein Verfahren zur Herstellung sowie deren Verwendung.

Poröse mineralische Untergründe, wie Baustoffe aus Kalksandstein, Beton oder Fassaden, Putze u.a. können nach verschiedenen Methoden gegen Umwelteinflüsse geschützt werden.

Die Beschichtung der Baustoffe und/oder Fassaden mit filmbildenden Beschichtungen hat sich mittlerweile durchgesetzt.

Nach dem Stand der Technik bestehen diese Beschichtungen im wesentlichen aus organischen Polymerdispersionen (Bindemitteln), Pigmenten und Füllstoffen und enthalten in einigen Fällen Polysiloxane zur Verbesserung der wasserabweisenden Wirkung.

Die Bemühungen der Bau- und Baustoffindustrie, den Anteil an organischen Polymeren zu reduzieren oder vorzugsweise ganz zu vermeiden und so umweltverträglichere Beschichtungen zu erhalten, führten zur Entwicklung von Silikatfarben. Diese weitgehend anorganischen Beschichtungssysteme bestehen im wesentlichen aus wasserlöslichen Silikaten, denen kleine Mengen an organischen Polymerdispersionen sowie Pigmente, Füllstoffe und gegebenenfalls zur Erhöhung der wasserabweisenden Wirkung Polysiloxane zugemischt werden.

Solche Beschichtungssysteme haben jedoch den Nachteil, daß sie in der Frühphase der Aushärtung gegenüber Regen und anderen atmosphärischen Einflüssen, wie Schmutz und/oder Mikroorganismen, nicht ausreichend beständig sind.

Aufgabe der vorliegenden Erfindung war es, wasserabweisende, bereits bei Temperaturen unter 100°C, vorzugsweise bei Raumtemperatur, ausreichend härtende Beschichtungen mit einem möglichst geringen Anteil an organischen Polymeren bereitzustellen.

Es wurde nun gefunden, daß Mischungen, die im wasserfreien Zustand
mindestens ein Polysiloxan (Komponente A),
mindestens einen reaktiven, vorzugsweise anorganischen Füllstoff (Komponente B),
mindestens ein unreaktives Pigment und/oder einen unreaktiven Füllstoff (Komponente C),
mindestens einen plättchen- oder faserförmigen Füllstoff (Komponente D) und gegebenenfalls weitere Zusätzen und mindestens ein reaktionsfähiges (Oligo)silan (Komponente E) in bestimmten Mengen enthalten,
und die nach einem bestimmten Verfahren hergestellt wurden, überragende Eigenschaften gegenüber dem Stand der Technik aufweisen.

Gegenstand der vorliegenden Erfindung sind zudem Mischungen, erhältlich durch
- Vorlegen von 30 bis 50 Gew.-%, bevorzugt 30 bis 45 Gew.-%, besonders bevorzugt 30 bis 40 Gew.-% mindestens eines reaktiven Füllstoffs oder eines Gemisches aus mehreren reaktiven Füllstoffen (Komponente B)) als wäßrige Dispersion,
- Zugabe von 0 bis 5 % Netzmittel als Zusatzstoff (Komponente G)), 10 bis 40 Gew.-%, vorzugsweise 20 bis 40 Gew.-%, besonders bevorzugt 20 bis 30 Gew.-%, mindestens eines unreaktiven Pigments und/oder unreaktiven Füllstoffs (Komponente C)), gegebenenfalls Nachdosierung weiterer Mengen der Komponente B), wobei die Summe aller Komponenten B) maximal 50 Gew.-% beträgt, 0,1 bis 10 Gew.-%, bevorzugt 0,5 bis 5 Gew.-%, besonders bevorzugt 1 bis 3 Gew.-%,
   mindestens eines reaktionsfähigen Oligosilans (Komponente E) und 5 bis 20 Gew.-%, bevorzugt 5 bis 10 Gew.-%, mindestens eines plättchenförmigen oder faserförmigen Füllstoffes (Komponente D)), der sich von Komponente B) und Komponente C) unterscheidet, unter Rühren und anschließendes 5 bis 60 minütiges Rühren und
- anschließende Zugabe 0 bis 35 Gew.-%, bevorzugt 0 bis 5 Gew.% weiterer Zusatzstoffe (Komponente G)) und 15 bis 30 Gew.-% bevorzugt 15 bis 25 Gew.-%, besonders bevorzugt 15 bis 20 Gew.-%, mindestens eines Polysiloxans oder eines Gemisches aus mehreren Polysiloxanen (Komponente A)) unter Rühren.

Der Wasseranteil der Mischung beträgt 10 bis 90 %, bevorzugt 20 bis 80 %, besonders bevorzugt 30 bis 70 Gew.-%. Das in der Mischung enthaltene Wasser kann auch gegebenenfalls organische Lösungsmittel enthalten.

In den erfindungsgemäßen Mischungen ist Komponente A) vorzugsweise mindestens ein hydroxy- und/oder alkoxyfunktionelles Polysiloxan, welches mit Wasser oder anderen Lösemitteln im Gemisch mit Wasser und Emulgatoren Emulsionen ausbildet. Polysiloxane im Sinne der Erfindung sind beispielsweise Copolymere aus Polysiloxan und Polyester, Polyether und/oder Polyepoxid (bzw. deren Gemische), ebenso wie lineare oder verzweigte Organopolysiloxane. Als Komponente A) wird vorzugsweise ein Polysiloxanharz oder ein Gemisch aus mehreren Polysiloxanharzen eingesetzt, wie sie in EP-A 51 418, S. 3, Zeilen 14-52, beschrieben sind. Besonders bevorzugt sind Polysiloxanharze, die einen Anteil von 20 - 95, bevorzugt 40 - 80, besonders bevorzugt 40 - 60 Gew.-%, an trifunktionellen Bausteinen der allgemeinen Formel, 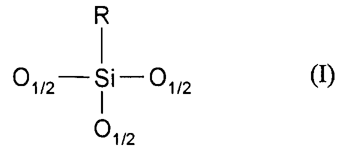 aufweisen, wobei
- R: einen beliebigen organischen Rest mit Si-C-Verknüpfung bezeichnet und
- R: bevorzugt einem C₁-C₁₄-Alkylrest entspricht.

Bevorzugt wird die Komponente A) als wäßrige Emulsion eingesetzt. Der Einsatz von A) in einem organischen Lösemittel ist ebenfalls möglich, er hat lediglich ökologische Nachteile.

Die Komponente A) kann jedoch ebenso als Mischung mehrerer wäßriger Emulsionen vorliegen. Wird die Komponente A) in Form einer wäßrigen Emulsion eingesetzt, so liegt deren Siloxangehalt zwischen 5 und 80 Gew.-%, bevorzugt zwischen 10 und 70 Gew.-%, besonders bevorzugt zwischen 20 und 60 Gew.-%. Komponente A) kann jedoch neben Wasser gegebenenfalls noch weitere Lösemittel enthalten. Es sollte vorzugsweise mindestens ein Emulgator und/oder ein rheologisches Additiv, z.B. ein Verdickungsmittel, zugesetzt werden. Als Emulgatoren sind sowohl kationische als auch anionische Emulgatoren einsetzbar. Bevorzugt sind nichtionische Emulgatoren. Die in Form einer Emulsion vorliegende Komponente A) kann Emulgatoren, Verdickungsmittel und auch andere Hilfsstoffe in Mengen von 0,5 - 15 Gew.-%, bevorzugt 1 - 6 Gew.-%, besonders bevorzugt 1,5 - 5 Gew.-%, enthalten.

Als weiteres Zusatzmittel kann Komponente A) 0 - 5 Gew.-%, bevorzugt 0 - 2 Gew.-%, besonders bevorzugt 0 - 1 Gew.-% eines Bakterizids oder Fungizids enthalten. Die Komponente A) kann sowohl aus reinen Polysiloxanen und/oder Ölen bestehen als auch in Form entsprechender Emulsionen in Wasser sowie im Gemisch mit Wasser und weiteren Lösungsmitteln vorliegen. Zudem kann die Komponente A) zusätzlich Katalysatoren enthalten. Der Gehalt an Katalysatoren kann bis zu 1 Gew.-%, bezogen auf die Komponente A), betragen, wobei übliche Kondensationskatalysatoren, wie beispielsweise Organozinnverbindungen, Organotitanverbindungen und Organoaluminiumverbindungen einsetzbar sind.

In den erfindungsgemäßen Mischungen umfaßt die Komponente B) alle reaktiven anorganischen oder mit organischen Resten modifizierte anorganische Verbindungen, die reaktive Gruppen enthalten und die mit sich selbst und/oder anderen Komponenten der erfindungsgemäßen Mischungen reagieren können. Bevorzugt werden diese Stoffe in Form ihrer wasserverdünnbaren Lösungen oder Emulsionen eingesetzt. Einige Beispiele für Komponente B) sind Kieselsole, Kieselsäureester, Organosilikonate, wie z.B. Kalium- und/oder Natriummethylsilikonat, Silane und/oder deren (Teil)hydrolysate, Titansäureester, Aluminate, Zirkonaluminate, Aluminiumhydroxid, Zinkoxid und organisch modifizierte Füllstoffe jeder Art, die reaktive Gruppen im obengenannten Sinne enthalten, wie z.B. Epoxy-, Amino- oder ungesättigte Gruppen enthaltende Füllstoffe, wie z.B. Quarz, Glas, Talkum, Kreide. In einer bevorzugten Ausführungsform der Erfindung ist B) eine Mischung aus Kieselsol und Zinkoxid. Der Begriff Füllstoffe schließt auch Stoffe ein, die nach der erfindungsgemäßen Reaktion als feste Verbindungen bzw. Reaktionsprodukte vorliegen. So können als Edukte z.B. flüssige Titansäureester fungieren, die in die Beschichtungen eingebaut werden, ebenso wie z.B. Isocyanate, bevorzugt aliphatische Isocyanate.

In den erfindungsgemäßen Mischungen ist der reaktive Füllstoff B) vorzugsweise kolloidale Kieselsäure in Form eines Kieselsols, Alkylsilikonat, Aluminiumhydroxid oder ein Gemisch aus diesen Verbindungen, ein Silan und/oder dessen (Teil)hydrolysat. Als Alkylsilikonat ist Natrium- oder Kaliummethylsilikonat besonders bevorzugt. Die kolloidale Kieselsäure hat dabei einen Gehalt von von 5 bis 50 Gew.-% SiO₂, bevorzugt 10 - 40 Gew.-%, SiO₂, besonders bevorzugt 15 bis 35 Gew.-% SiO₂. In einer bevorzugten Ausführungsform der vorliegenden Erfindung ist Komponente B) eine wäßrige Kieselsäuredispersion mit einem Feststoffgehalt von 20 bis 60 Gew.-%. Ein reaktiver Füllstoff im Sinne der Erfindung ist ebenfalls pyrogene oder gefällte Kieselsäure in Pulverform sowie kolloidale Kieselsäure in Form von Kieselsolen. Die Kieselsolteilchen können auch nach den bekannten Verfahren oberflächenmodifiziert sein. Ebenfalls bevorzugt wird als Komponente B) gegebenenfalls modifiziertes Kieselsol eingesetzt, wie es in den DE-B 2 408 896, US-A 2 892 797, US-A 2 574 902, US-A 2 457 971, US-A 2 668 149 und US-A 2 650 200 beschrieben ist. Besonders bevorzugt sind Kieselsole mit einer Partikelgröße von 5 bis 100 Nanometer, ganz besonders bevorzugt 10 bis 30 Nanometer.

In den erfindungsgemäßen Mischungen entspricht Komponente C) einem Pigment oder Füllstoff in Form eines anorganischen, organischen und/oder metallischen Stoffes oder deren Gemische, wie z.B. Aluminiumoxid, Magnesium- und Calciumphosphate und/oder -carbonate, -carbide, Nitride, Magnesiumoxid, Aluminiumhydroxid, Titandioxid, verschiedene Eisenoxide, Siliciumcarbid, Zinkoxid, Aluminiumbronze, Zinn- und Zinkstaub, Phthalocyaninblau, verschiedene Spinelle, Ruß, Graphit, Glas- und Emailpulver usw. Ganz besonders bevorzugt ist C) mindestens ein unreaktives anorganisches Pigment und/oder mindestens ein unreaktiver anorganischer Füllstoff, wie beispielsweise Eisenoxid und Titandioxid.

Komponente D) umfaßt alle plättchen- und faserförmigen Füllstoffe. Als Beispiele seien Glimmer, Kaolin, Bentonite, Montmorionite, Glasfasern, organische (Mikro)fasern, Aluminiumflakes und andere Metalle usw. genannt.

Komponente E) umfaßt alle gängigen Silane und/oder deren (Teil)hydrolysate bzw. Gemische von verschiedenen Silanen und/oder deren (Teil)hydrolysaten. Sie können in Form ihrer wäßrigen Lösungen und/oder Emulsionen oder Dispersionen vorliegen. Ganz besonders bevorzugt sind Lösungen der Komponente E) in Wasser. Als bevorzugte Komponente E) seien wasserlösliche Teilhydrolysate von funktionellen Silanen wie z.B. Aminogruppen, Epoxy- und/oder Hydroxylgruppen enthaltende Silane. Besonders bevorzugt sind Teilhydrolysate von 3-Aminopropyltrisalkoxysilan, 1,2-Epoxypropyltrisalkoxysilan und/oder 3-Hydroxypropyltrisalkoxysilan. Ebenfalls bevorzugt sind Carboxyl-gruppenhaltige Silane.

Als Komponente F) kommen bevorzugt alle Katalysatoren in Frage, die Kondensationsreaktionen beschleunigen. Besonders bevorzugt sind Katalysatoren für die Reaktion von Hydroxylgruppen in Silanolen bzw. für die Reaktion von Silanolen mit Alkoxy-Silangruppen, wie z.B. metallorganische Verbindungen des Zinns. Typische Beispiele für die Komponente F) sind Dibutylzinndilaurat oder Dibutylzinndioctoat.

Die Komponente G) kann jeder Zusatzstoff, der zur Herstellung von Lacken und Farben bekannt ist, sein, wie z.B. Lackadditive, wie Dispergier-, Verlauf-, Verdickungs-, Entschäumungs- und andere Hilfsmittel, Fungizide, Bakterizide, Stabilisatoren sowie Inhibitoren. Komponente G) kann aber auch ein Netzmittel oder ein Polymer oder ein Gemisch aus mehreren Polymeren sein, wie beispielsweise Cellulose, Polyether, Polyacrylate, Polystyrol/acrylate, Polyurethane, Weichmacher sowie verschiedene anorganische Harze, bevorzugt als wasserverdünnbare Dispersionen. Besonders bevorzugt sind G) organische Polymerdispersionen, wie Styrol/Acrylat- oder Acrylatdispersionen.

Die erfindungsgemäßen Mischungen können auch als Zusatzstoffe organische, metallorganische und/oder anorganische Korrosionsinhibitoren enthalten, wie z.B. Phosphorsäurederivate, diverse Amine, substituierte Benztriazole, Nitrosophthalsäuresalze, substituierte Phenole oder ähnliches.

Die Viskosität der erfindungsgemäßen Mischungen beträgt vorzugsweise 15 bis 100, besonders bevorzugt 19 bis 40 Sekunden, gemessen in DIN-Becher, Durchmesser 4 mm, nach DIN 53211.

Gegenstand der vorliegenden Erfindung ist zudem ein Verfahren zur Herstellung von Beschichtungsmischungen aus den erfindungsgemäßen Mischungen, wonach die Komponente B) als wäßrige Dispersion vorgelegt wird, nachfolgend unreaktive Pigmente und/oder unreaktive Füllstoffe, gegebenenfalls Netzmittel (Komponente G), Komponenten E) (Oligosilan) und Komponente D) unter Rühren zugegeben werden, anschließend gegebenenfalls weitere Komponenten G), Komponenten A) und gegebenenfalls Komponenten F) unter Rühren zugemischt werden.

Besonders bevorzugt werden die Beschichtungsmischungen nach dem erfindungsgemäßen Verfahren hergestellt.

In einer besonders bevorzugten Ausführungsform der vorliegenden Erfindung wird wäßriges Kieselsol als Komponente B) ganz oder teilweise vorgelegt, dann werden in der nachfolgenden Reihenfolge unreaktive Pigmente und/oder unreaktive Füllstoffe sowie Netzmittel unter Rühren zugegeben und 5 bis 60 Minuten, bevorzugt 10 bis 30 Minuten, intensiv dispergiert, der Rest der Komponente B), gegebenenfalls Wasser sowie die Komponenten C) und D) werden unter Rühren zugegeben und homogenisiert, danach werden gegebenenfalls weitere Komponenten G), wie z.B. Entschäumer, unter Rühren zugesetzt, anschließend werden Komponente A) und gegebenenfalls Dibutylzinndilaurat (Komponente F) unter Rühren zugemischt und 5 bis 60 Minuten, bevorzugt 10 bis 30 Minuten gerührt.

Zur Herstellung der Dispersionen aus Komponenten A) bis G) werden die zur Herstellung von Lacken angewandten Methoden, wie Dissolver und andere intensive Mischverfahren bevorzugt. Der Einsatz verschiedener Hilfsstoffe, insbesondere Dispergiermittel, wie Polyacrylsäurederivate, Polyphosphate, Phosphonocarbonsäurederivate ist bei der Herstellung dieser Mischungen bevorzugt. Zur Stabilisierung der erfindungsgemäßen Beschichtungssysteme und deren Komponenten und zum Schutz vor Sedimentation können verschiedene organische und anorganische Verbindungen, wie beispielsweise Bentonite, Cellulosen, Polyacrylate oder Polyurethanverdicker, eingesetzt werden.

Die Viskosität der erfindungsgemäßen Mischungen beträgt vorzugsweise 15 bis 100, besonders bevorzugt 19 bis 40 Sekunden, gemessen im DIN-Becher, Durchmesser 4 mm, nach DIN 53211.

Gegenstand der vorliegenden Erfindung ist auch ein Verfahren zur Herstellung von Beschichtungen aus den erfindungsgemäßen Mischungen, wobei die Mischung auf das zu beschichtende Material aufgebracht und 1 bis 600 Minuten bei Temperaturen < 100°C, vorzugsweise Raumtemperatur, getrocknet oder aber während der Herstellung des zu verwendenden Substrats, z.B. bei der Herstellung von Betonfertigteilen, aufgebracht wird. Vorzugsweise werden die Mischungen in Form einer wäßrigen Dispersion eingesetzt.

Als zu beschichtende Materialien können nahezu alle anorganischen Substrate eingesetzt werden, wie Baustoffe und Konstruktionselemente aus Kalksandstein, Beton, Ziegeln, Gips sowie Fassaden verschiedenster Zusammensetzung. Besonders bevorzugt sind Beton-Formteile, Wärmedämmstoffe, Kalksandstein und Fassaden jeder Alt. Eine besonders bevorzugte Ausführungsform der vorliegenden Erfindung ist das Aufbringen der erfindungsgemäßen Beschichtungen auf Materialien während des Herstellungsprozesses. Beispielsweise sei hier die Produktion von Beton-Dachsteinen genannt, bei der die erfindungsgemäßen Beschichtungen bevorzugt in einem oder zwei nacheinander folgenden Schritten aufgetragen werden, die auf den Reaktionsablauf der Herstellung abgestimmt sind.

Die erfindungsgemäßen Beschichtungen besitzen bereits nach Trocknung bei Raumtemperatur eine ausreichende Festigkeit, um transportiert und/oder anders gehandhabt zu werden. Sie können jedoch auch bei erhöhten Temperaturen nachbehandelt werden, die dem jeweiligen Anwendungszweck angepaßt sind. So sind z.B. bei der Herstellung von beschichteten Beton-Dachsteinen Temperaturen um 70°C bevorzugt. Die erfindungsgemäßen Beschichtungen sind sofort nach Trocknung dauerhaft beständig gegen atmosphärische Einflüsse, Verschmutzung und den Angriff von Mikroorganismen.

Die erfindungsgemäßen Beschichtungen verleihen dem beschichteten Material hohe wasserabweisende Wirkung. Durch das Fehlen oder den niedrigen Anteil an organischen Bestandteilen sind sie in hohem Maße umweltverträglich.

Die zu beschichtenden Materialien können je nach Alt und Anwendungszweck vorbehandelt oder unvorbehandelt eingesetzt werden. Eine etwaige Vorbehandlung kann nach allen bekannten Verfahren, wie beispielsweise der Strahlbehandlung, durchgeführt werden.

Das Aufbringen der erfindungsgemäßen Mischungen auf eine feste Unterlage erfolgt bevorzugt nach der Spritz-, Tauch-, Rollen- und Streichtechnik. Je nach Anforderungen können auf diese Weise Beschichtungen mit Schichtdicken von 5 bis 300 µm, bevorzugt 10 bis 150 µm, besonders bevorzugt 15 bis 100 µm, hergestellt werden.

Gegenstand der vorliegenden Erfindung ist auch die Verwendung der erfindungsgemäßen Mischungen zur Beschichtung von Baustoffen und Fassaden und Putzen beliebiger Art.

Die nachfolgenden Beispiele erläutern die Erfindung. Die Erfindung selber ist jedoch nicht auf diese Beispiele beschränkt.

### Ausführungsbeispiele

Folgende Substanzen wurden in den Beispielen eingesetzt:
**I) als Polysiloxane**:
   Ia) 47%ige wäßrige Emulsion eines hydroxyfunktionellen Methylsiliconharzes der mittleren Zusammensetzung T₂₁₀D₂₃M₄ mit einem mittleren Molekulargewicht von ca. 12.000
**II**) **als reaktive anorganische Füllstoffe**:
   IIa) 30%ige wäßrige kolloide Kieselsäuresuspension mit einer BET-Oberfläche von 100 m²/g und einem pH-Wert von 10
   IIb) 50%ige wäßrige kolloidale Kieselsäuresuspension mit einer BET-Oberfläche von 100 m²/g und einem pH-Wert von 10
   IIc) Zinkoxid Aktiv der Fa. Bayer AG
**III) als Füllstoffe**:
   IIIa) Talkum: AT 1 der Norwegian Talc Mineral A.S.
   IIIb) Kreide: BLP 2 der Omya GmbH
**IV) als plättchen und faserförmiger Füllstoff:**
   IVa) Glimmer: GHL/CM der Fa. Luh GmbH
**V) als Pigmente**:
   Va) Bayferrox Schwarz 303T®: Eisenoxid der Firma Bayer AG
   Vb) Bayferrox Rot 120 FS®: Eisenoxid der Firma Bayer AG
   Vc) Bayferrox 605/12 Ü®: Eisenoxid der Firma Bayer AG
**VI) als (Oligo)silan**:
   VIa) Aminopropylsilan, 20%ig in Wasser, der Fa. OSI, Düsseldorf
**VII) als Katalysator**:
   VIIa) 10%ig wäßrige Emulsion von Dibutylzinndilaurat
**VIII) als Verflüssiger**:
   VIIIa) Bayhibit S®: Natriumsalz einer trifunktionellen Phosphonocarbonsäure der Firma Bayer AG

Die Viskosität der in den Beispielen eingesetzten Mischungen beträgt zwischen 19 bis 40 Sekunden, gemessen im DIN-Becher, Durchmesser 4 mm, nach DIN 53211.

### Beispiele 1 und 1.1 (Vergleich)

Vorschrift zur Herstellung des Beschichtungsmaterials (Mengenangabe s. Tabelle 1, Prüfergebnisse siehe Tabelle 2):

Wasser wird vorgelegt und unter Rühren die Komponenten IIIa, IIIb und Vb zugegeben und mit dem Dissolver bei ca. 3000 upm gerührt. Anschließend wird die Komponente VIII zugesetzt und weitere 60 Minuten bei 1800 upm gerührt. Diese wäßrige Slurry wird dann den vorgemischten Komponenten I und IIa zugefügt. Anschließend wird die Mischung 10 Minuten bei 1800 upm gerührt.

Bei Beispiel 1.1 werden die Komponenten VI und VII zum Schluß hinzugefügt und eingerührt.

### Beispiel 1a (erfindungsgemäß)

Herstellverfahren wie in Beispiel 1(Vergleich), jedoch mit der in Tabelle 1 angegebenen Zusammensetzung.

### Beispiel 2

Allgemeine Vorschrift zur Herstellung des erfindungsgemäßen Beschichtungsmaterials (Mengenangaben s. Tabelle 1,Prüfergebnisse, siehe Tabelle 2):
1) die Komponente IIa wird vorgelegt, weiterhin werden
2) in der nachfolgenden Reihenfolge Komponente VIII, die Komponenten V und die Komponenten IIIa und IIb unter Rühren zugegeben und anschließend 20 Minuten intensiv bei ca. 3000 upm dispergiert,
3) anschließend werden Wasser und Komponente IVa unter Rühren zugegeben und homogenisiert, dann wird die Komponente IIc zugefügt und 20 Minuten bei ca. 1000 upm dispergiert,
4) schließlich werden Komponente I und Komponente VII zugegeben und weitere 20 Minuten gerührt.

### Beispiel 3

Allgemeine Vorschrift zur Herstellung des erfindungsgemäßen Beschichtungsmaterials (Mengenangaben s. Tabelle 1, Prüfergebnisse, siehe Tabelle 2):
1) die Komponente IIa wird zu 10 bis 40 % vorgelegt, weiterhin werden
2) in der nachfolgenden Reihenfolge Komponente VIII, die Komponenten V und die Komponenten IIIa und IIb unter Rühren zugegeben und anschließend 20 Minuten intensiv bei ca. 3000 upm dispergiert,
3) anschließend werden Komponente IVa, gegebenenfalls Wasser und der Rest der Komponente IIa unter Rühren zugegeben; nach homogener Verteilung wird die Komponente IIb zugefügt und 20 Minuten bei ca. 1000 upm dispergiert,
4) schließlich werden Komponente I und Komponente VII zugegeben und weitere 20 Minuten gerührt.

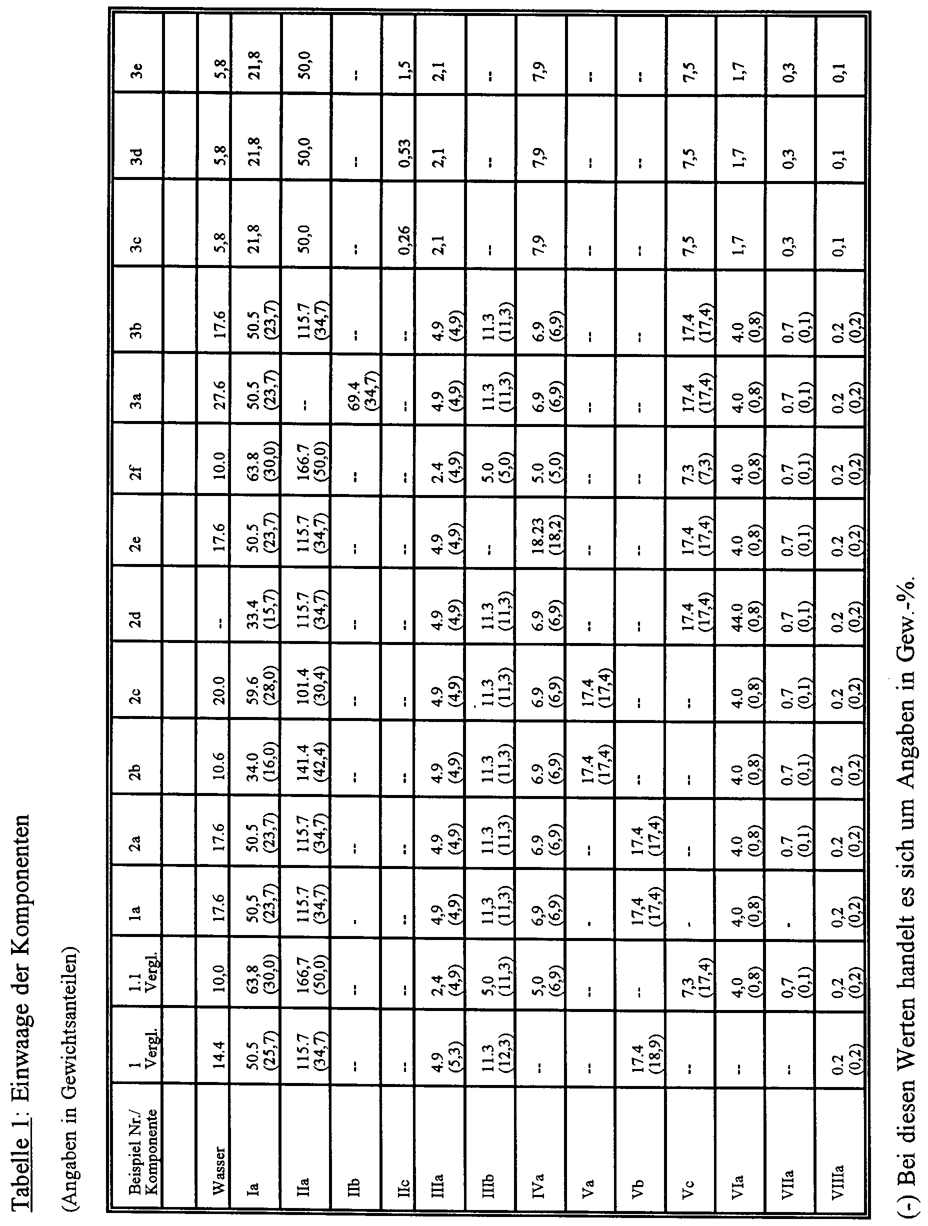

**Tabelle 2**

| Prüfergebnisse | | | | | | | | | | | | | | |
|---|---|---|---|---|---|---|---|---|---|---|---|---|---|---|
| Beispiele | 1 | 1.1 | 1a | 2a | 2b | 2c | 2d | 2e | 2f | 3a | 3b | 3c | 3d | 3e |
| | | | | | | | | | | | | | | |

| Prüfungen | | | | | | | | | | | | | | |
|---|---|---|---|---|---|---|---|---|---|---|---|---|---|---|
| Ausblühung | 0 | 0* | 0 | 0 | 0 | 0 | 0 | 0 | 0 | 0 | 0 | 0 | 0 | 0 |
| Härte | 55 | 57 | 58 | 60 | 53 | 53 | 60 | 59 | 50 | 58 | 58 | 65 | 69 | 72 |
| Gitterschnitt | 10 | 10 | 0 | 0 | 0 | 0 | 0 | 0 | 0 | 0 | 0 | 0 | 0 | 0 |
| Rissbildung | 4 | 3-4 | 2-3 | 1 | 3 | 0 | 3 | 0 | 0 | 0 | 1 | 0 | 0 | 0 |
| Verlauf Struktur | 1 | 3 | 1 | 1 | 1 | 0-1 | 1 | 3 | 1 | 1 | 1 | 1 | 1 | 1 |
| Lager-Stabilität der Mischung | >4 Mon | <2 Wo | >4 Mon | >4 Mon | >4 Mon | >4 Mon | >4 Mon | >4 Mon | >4 Mon | >4 Mon | >4 Mon | >4 Mon | >4 Mon | >4 Mon |

| | | | | | | | | | | | | | | |
|---|---|---|---|---|---|---|---|---|---|---|---|---|---|---|
| Mon = Monate | | | | | | | | | | | | | | |
| Wo = Wochen | | | | | | | | | | | | | | |
| * = fleckige Oberfläche | | | | | | | | | | | | | | |

### Meßgrößen und Testbedingungen zu Beurteilung der Beschichtungen:

Das Beschichtungsmaterial wird auf frischen, nassen Beton aufgetragen; die Beurteilungen erfolgten nach einer Trocknung von 6 Stunden bei 60°C in der Dampfkammer.

### Ausblühungen:

beurteilt wird die Ausblühung von Kalk/Carbonat
0 = keine Ausblühung

### Härte:

Pendelhärte nach König / DIN 53157

### Gitterschnitt:

je 10 Kreuzschnitte im Abstand von 2 mm; beurteilt wird die Zahl der abgeplatzten Felder in %

### Rissbildung:

bewertet werden Mikrorisse
0 = keine Risse
1 = wenige Risse
5 = voller Riß

### Verlauf:

0 = keine Struktur
1 = geringe Struktur
5 = sehr unruhige Oberfläche

## Patentansprüche

1. Mischungen, erhältlich durch:
- Vorlegen von 30 bis 50 Gew.-% mindestens eines reaktiven Füllstoffs oder eines Gemisches aus mehreren reaktiven Füllstoffen (Komponente B)) als wäßrige Dispersion,
- Zugabe von 0 bis 5 % Netzmittel als Zusatzstoff (Komponente G)), 10 bis 40 Gew.-% mindestens eines unreaktiven Pigments und/oder unreaktiven Füllstoffes (Komponente C)), gegebenenfalls Nachdosierung weiterer Mengen der Komponente B), wobei die Summe aller Komponenten B) maximal 50 Gew.-% beträgt, 0,1 bis 10 Gew.-% mindestens eines reaktionsfähigen (Oligo)silans (Komponente E)) und 5 bis 20 Gew.-% mindestens eines plättchenförmigen oder faserförmigen Füllstoffes (Komponente D)) der sich von B) und C) unterscheidet, unter Rühren und anschließendes 5 bis 60 minütiges Rühren und
- anschließende Zugabe 0 bis 35 Gew.-% weiterer Zusatzstoffe (Komponente G)) und 15 bis 30 Gew.-% mindestens eines Polysiloxans oder eines Gemisches aus mehreren Polysiloxanen (Komponente A)) unter Rühren.

2. Mischungen nach Anspruch 1, dadurch gekennzeichnet, daß diese 0,05 bis 0,2 Gew.-% mindestens eines Katalysators (Komponente F) enthält.

3. Mischungen nach einem der Ansprüche 1 bis 2, dadurch gekennzeichnet, daß die Komponente A) mindestens ein hydroxy- und/oder alkoxyfunktionelles Polysiloxan ist, welches mit Wasser oder anderen Lösemitteln im Gemisch mit Wasser und Emulgatoren Emulsionen ausbildet.

4. Mischungen nach einem der Ansprüche 1 bis 3, dadurch gekennzeichnet, daß der anorganische Füllstoff B) kolloidale Kieselsäure in Form eines Kieselsols, Alkylsilikonat, Aluminiumhydroxid und/oder ein Gemisch aus diesen Verbindungen ist.

5. Mischungen nach einem der Ansprüche 1 bis 4, dadurch gekennzeichnet, daß die Komponente B) eine wäßrige Kieselsoldispersion mit einem Feststoffgehalt von 20 bis 60 Gew.-% ist.

6. Mischungen nach einem der Ansprüche 1 bis 5, dadurch gekennzeichnet, daß Komponente B) Kieselsol und Zinkoxid enhält.

7. Mischungen nach einem der Ansprüche 1 bis 6, dadurch gekennzeichnet, daß das reaktionsfähige (Oligo)silan ein (Teil)hydrolysat von 3-Aminopropyl-, 1,2-Epoxypropyl- und/oder 3-Hydroxypropyltrisalkoxysilan ist.

8. Mischungen nach einem der Ansprüche 1 bis 6, dadurch gekennzeichnet, daß die weiteren Zusatzstoffe G) zusätzlich Styrol/Acrylat- oder Acrylatdispersionen enthält.

9. Verfahren zur Herstellung von Beschichtungsmischungen aus den Mischungen nach einem der Ansprüche 1 bis 8, dadurch gekennzeichnet, daß die Komponente B) als wäßrige Dispersion vorgelegt wird, nachfolgend unreaktive Pigmente und/oder unreaktive Füllstoffe, gegebenenfalls Netzmittel, Komponenten E) und D) unter Rühren zugegeben werden, anschließend gegebenenfalls weitere Komponenten G) unter Rühren zugesetzt wird und Komponente A) und gegebenenfalls Komponente F) unter Rühren zugemischt werden.

10. Verfahren zur Herstellung von Beschichtungen aus Mischungen nach einem der Ansprüche 1 bis 8, dadurch gekennzeichnet, daß die Mischung auf das zu beschichtende Material aufgebracht und 1 bis 600 Minuten bei Temperatur < 100°C getrocknet oder aber während der Herstellung des zu verwendenden Substrats aufgebracht wird.

11. Verwendung der Mischungen nach einem der Ansprüche 1 bis 9 zur Beschichtung von Baustoffen, Fassaden und Putzen beliebiger Art.
